# EUROPÄISCHE PATENTANMELDUNG

(11) **EP 0 648 798 A1**
(43) Veröffentlichungstag der Anmeldung: **19.04.1995**
(21) Anmeldenummer: 94115585.5
(22) Anmeldetag: 04.10.1994
(51) Int. Cl.: C08G 75/18, C08L 81/02

(54) **Verfahren zur Reduktion von Sulfoxidgruppen in Polymeren**

(30) Priorität: 07.10.1993 DE 4334198
(71) Anmelder: HOECHST AKTIENGESELLSCHAFT, D-65929 Frankfurt am Main (DE)
(72) Erfinder: Frank, Georg, Dr., D-65719 Hofheim (DE); Schleicher, Andreas, Dr., D-64683 Einhausen (DE); Kulpe, Jürgen, Dr., D-65929 Frankfurt (DE)

(57) **Zusammenfassung**

Die Erfindung betrifft ein Verfahren zur Herstellung von Polymersulfiden, das dadurch gekennzeichnet ist, daß Verbindungen mit Sulfoxidverknüpfungsgruppen der Formel (I),

-[(Ar¹)ₙ-X)]ₘ-[(Ar²)ᵢ-Y)]ⱼ-[(Ar³)ₖ-Z)]ₗ-[(Ar⁴)ₒ-W)]ₚ- (I)

in der die Symbole und Indices folgende Bedeutung haben:
Ar¹, Ar², Ar³, Ar⁴ sind gleich oder verschieden Arylensysteme mit 6 bis 18 C-Atomen,
W, X, Y, Z sind gleich oder verschieden -SO₂-, -S-, -SO-, -CO-, -O-,-CO₂-, Alkylen- oder Alkylidgruppen mit 1 bis 6 C-Atomen, vorzugsweise 1 bis 4 C-Atomen, wobei mindestens eine Verknüpfungsgruppe aus W, X, Y oder Z, eine -SO-Gruppe sein muß,
n, m, i, j, k, l, o und p sind gleich oder verschieden 0 oder eine ganze Zahl 1,2,3 oder 4, wobei ihre Summe mindestens 2 ergeben muß,
a) thermisch oder
b) in Gegenwart von aktivem Wasserstoff oder
c) photochemisch
behandelt und zu den entsprechenden Sulfiden reduziert werden.

## Beschreibung

Die Erfindung betrifft die selektive photochemische, chemische oder thermische Reduktion von Sulfoxidverknüpfungsgruppen zu Thioethern in Polymerverbindungen.

Es ist bekannt, daß sich organische Sulfoxide durch homogene katalytische Hydrierungen, z. B. mit Pd/Aktivkohle reduzieren lassen (K. Ogura et. al.,Synthesis, June 1975, S. 385). Diese Methode ist aber für heterogene Bedingungen, i.e. in Suspensionen, ungeeignet, da die Aktivkohle von dem gewünschten Produkt nur unvollständig zu entfernen ist. Bei sehr chemikalienresistenten Polymeren, wie p-Polyphenylensulfoxid kann daher eine solche Technik nicht angewendet werden. Ferner ist eine generelle Übertragbarkeit von bereits bekannten Reaktionen auf Polymere nicht möglich.

Aufgabe der Erfindung war es daher, Verfahren zu entwickeln, mit denen sich Sulfoxidverknüpfungsgruppen auch in chemikalienresistenten Polymeren zu den entsprechenden Thioethern umsetzen lassen.

Die Erfindung betrifft somit:
Ein Verfahren zur Herstellung von Polymersulfiden, das dadurch gekennzeichnet ist, daß Verbindungen mit Sulfoxidverknüpfungsgruppen der Formel I,

-[(Ar¹)ₙ-X)]ₘ-[(Ar²)ᵢ-Y)]ⱼ-[(Ar³)ₖ-Z)]ₗ-[(Ar⁴)ₒ-W)]ₚ- (I)

in der die Symbole und Indices folgende Bedeutung haben:
Ar¹, Ar², Ar³, Ar⁴ sind gleich oder verschieden Arylensysteme mit 6 bis 18 C-Atomen,
W, X, Y, Z sind gleich oder verschieden -SO₂-, -S-, -SO-, -CO-, -O-, -CO₂-, Alkylen- oder Alkylidgruppen mit 1 bis 6 C-Atomen, vorzugsweise 1 bis 4 C-Atomen, wobei mindestens eine Verknüpfungsgruppe W, X, Y oder Z, eine -SO-Gruppe sein muß,
n, m, i, j, k, l, o und p sind gleich oder verschieden 0 oder eine ganze Zahl 1,2,3 oder 4, wobei ihre Summe mindestens 2 ergeben muß,
a) thermisch oder
b) mit aktivem Wasserstoff oder
c) photochemisch
behandelt und zu den entsprechenden Sulfiden reduziert werden.

Als Verbindung der Formel I werden Polyarylensulfoxide und/oder Polyarylensulfid/sulfoxide mit der wiederkehrenden Einheit der Formel (II) bevorzugt, deren Herstellungsprozeß, z.B. in den Patentanmeldungen P 43 14 736.4, P 43 14 735.6, beschrieben ist. 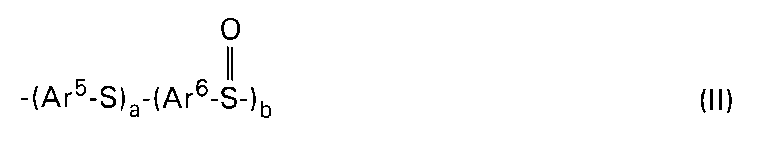
Das Verhältnis von Sauerstoff zu Schwefel beträgt in der Verbindung der Formel (II) < = 1 und > 0, wobei die Summe aus a und b stets 1 ist, so daß a 0 ist wenn b 1 ist. In Formel (II) sind Ar⁵ und Ar⁶ gleich oder verschieden Naphtylen, Bi- und Triphenylen und Phenylen.

Besonders bevorzugt sind Verbindungen mit wiederkehrenden Einheiten der Formel (III), 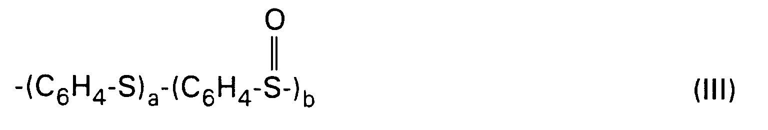
wobei das Sauerstoff:Schwefel-Verhältnis sowie die Definition für a und b wie oben angegeben ist.

Für die Erfindung sind im allgemeinen Polymere geeignet, die ein mittleres Molekulargewicht von 4 000 bis 200 000 g/mol, vorzugsweise von 10 000 bis 150 000 g/mol, insbesondere 25 000 bis 100 000 g/mol, bestimmt durch GPC, aufweisen.

Gemäß der Erfindung lassen sich die Sulfoxidgruppen der Polymere durch aktiven Wasserstoff in unterschiedlichen Medien reduzieren. Dies kann sowohl in einer Suspension als auch direkt erfolgen. Temperatur und Zeitdauer hängen dabei von der Aktivierung des Wasserstoffs und der Dicke der zu reduzierenden Schicht ab.

Bei Hydrierungen in Brönsted-Säuren kann der Wasserstoff durch die Zugabe unedler Metalle mit einem Elektronenpotential, das unterhalb von Wasserstoff liegt, gebildet werden. In der Technik werden hierzu als gängige Metalle Eisen oder Zink eingesetzt, die hier beispielhaft genannt sein sollen. Die Reduktion erfolgt bei Temperaturen von 30°C bis 120°C, vorzugsweise 50°C bis 100°C und besonders bevorzugt bei 50°C bis 90°C. Je nach Dicke der zu reduzierenden Teile liegt die Reaktionszeit zwischen 1 Stunde und 24 Stunden, vorzugsweise zwischen 2 Stunden und 20 Stunden und besonders bevorzugt zwischen 4 und 20 Stunden.

Gemäß der Erfindung können die direkten Umsetzungen mit aktivem Wasserstoff auch im Autoklaven durchgeführt werden. Dabei wird das Polymer in einer Wasserstoffatmosphäre bei Drücken von 10 bar bis 300 bar, vorzugsweise 20 bar bis 250 bar und besonders bevorzugt 30 bar bis 200 bar, und bei Temperaturen von 60°C bis 220°C, vorzugsweise 80°C bis 200°C und besonders bevorzugt 100°C bis 200°C umgesetzt. Je nach Dicke und Morphologie der zu reduzierenden Teile liegt die Reaktionszeit zwischen 1 und 36 Stunden, vorzugsweise zwischen 4 und 30 Stunden und besonders bevorzugt zwischen 8 und 24 Stunden.

Ferner können im Autoklaven Suspensionshydrierungen in gesättigten aliphatischen Alkoholen mit einer Kettenlänge von C1 bis C5 und/oder gesättigten aliphatischen Carbonsäuren mit einer Kettenlänge von C1 bis C5 durchgeführt werden. Dies geschieht in einer Wasserstoffatmosphäre bei Drücken von 10 bis 300 bar, vorzugsweise 20 bar bis 250 bar und besonders bevorzugt 30 bis 200 bar, und bei Temperaturen von 40°C bis 180°C, vorzugsweise 60°C bis 160°C.

Eine weitere Möglichkeit zur Aktivierung von Wasserstoff ist der Zusatz eines Katalysators, der sich in nicht-oxidierenden Säuren löst, z.B. Raney-Nickel. Je nach Dicke der zu reduzierenden Teile liegt die Reaktionszeit zwischen 1 Stunde und 24 Stunden, vorzugsweise zwischen 2 Stunden und 20 Stunden und besonders bevorzugt zwischen 4 und 20 Stunden.

Der Reaktion kann auch photochemisch in gängigen Vakuum-Anlagen durchgeführt werden, die mit Strahlungsquellen im Energiebereich zwischen 0.5 und 1000.000.000 eV, bevorzugt 0.5 - 100.000.000 eV, bzw. besonders bevorzugt 0.5 - 50.000.000 eV, ausgerüstet sind. Die Strahlungsdichten der Anlagen können im Bereich von 0.1 µW/cm²s bis 1000 GW/cm²s variieren. Als Strahlungsquellen können Photonenquellen, wie Synchrotron-Strahlung oder UV-Lampen, bzw. Elektronenstrahlquellen, eingesetzt werden. Gemäß der Erfindung liegt die Temperatur im Bereich von 4 K bis 600 K, vorzugsweise von 270 bis 550 K und besonders bevorzugt 275 K bis 520 K. Die Behandlungszeit liegt, in Abhängigkeit von der Strahlungsdichte, im Bereich von 30 Sekunden bis 48 Stunden, vorzugsweise von 1 Minute bis 36 Stunden und besonders bevorzugt von 1 Minute bis 24 Stunden.

Die Reduktion kann auch thermisch durchgeführt werden, z.B. in gängigen Vakuumöfen in einem Druckbereich zwischen 10 bar und 10⁻¹¹ mbar, vorzugsweise von 1 bar bis 10⁻⁹ mbar und besonders bevorzugt von 1 bar bis 10⁻⁸ mbar sowie im Temperaturbereich zwischen 100 und 600°C, vorzugsweise 120 bis 500°C und besonders bevorzugt 120°C bis 400°C. Weiter ist die Reduktion an Luft oder unter Schutzgasatmosphäre, z.B. N₂, O₂ oder Edelgasatmosphäre, in den angegebenen Temperatur- und Druckbereichen möglich. Die Behandlungszeit liegt, in Abhängigkeit von Druck und Temperatur im Bereich von 1 Minute bis 100 Stunden, vorzugsweise von 1 Minute bis 72 Stunden und besonders bevorzugt von 1 Minute bis 48 Stunden.

Die Polymere können als Pulver, Fasern oder Formkörper eingesetzt werden. Die Tiefe der Reduktion ist dabei stark abhängig von der Morphologie, der Kristallinität, Temperatur, Behandlungszeit und Druck. Die Pulver besitzen handelsübliche Teilchengrößen, wobei auch Granulate verwendbar sind. Werden die Polymere als Fasern verwendet, werden diese als Stapelfasern, Nadelfilz, "non woven" Material, Kardenband oder Gewebe eingesetzt. Auch Folien oder Folienschnipsel können eingesetzt werden.

Bei der Reduktion der eingesetzten Polyarylene werden die Polymere bis zur Stufe des entsprechenden Polyarylensulfids umgesetzt. Die so hergestellten Polyarylensulfide können für jede bisher bekannte Anwendung, z.B. zur Herstellung von Formteilen durch Spritzguß, eingesetzt werden.

Das Polyarylensulfid kann unverschnitten zur Herstellung von Formkörpern eingesetzt werden. Möglich ist aber auch der Zusatz von üblichen Füllstoffen, wie Kreide, Talk, Ton, Glimmer, und/oder faserförmige Verstärkungsmittel, wie Glas- und Kohlenstoffasern, Whiskers, sowie weitere übliche Zusatzstoffe und Verarbeitungshilfsmittel, z.B. Gleitmittel, Trennmittel, Antioxidantien, UV-Stabilisatoren, enthalten.

Es können ferner Fasern und Folien hergestellt werden. Die Folien können uniaxial oder biaxial verstreckt sein, die Fasern unverstreckt oder verstreckt sein.

Weiterhin können die entstandenen Polyarylensulfide entsprechend der deutschen Patentanmeldung P 43 14 734 als Filtermaterial für Ozon oder entsprechend der Patentanmeldung P 43 28 405.7-27 als Filtermaterial für Stickoxide eingesetzt werden, wodurch sie zu den entsprechenden Sulfoxiden umgesetzt werden. Dies bedeutet, daß das erfindungsgemäße Verfahren auch zur Rezyklierung derartiger Filtermaterialien verwendbar ist.

### Beispiele:

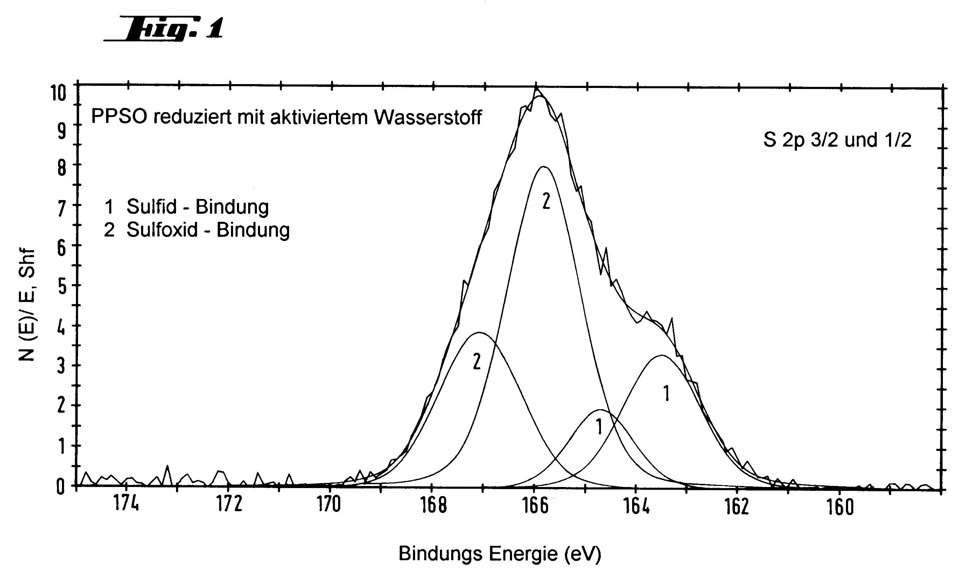

1.) Herstellung von Polyphenylensulfoxid gemäß Deutsche Patentanmeldung P 43 14 736.4.
2) Chemische Reduktion:
2 g p-Polyphenylensulfoxid werden bei 80 °C in 200 ml verdünnter Salzsäure vorgelegt. Anschließend gibt man innerhalb von 4 Stunden 13 g Zink zu. Das verbleibende Polymer wird abfiltiert, neutral gewaschen und getrocknet.
Ausbeute: 1,9 g
Electron Spectroscopy for chemical analysis (ESCA)-Untersuchungen des Schwefel 2p-Siganls (Abb. 1) zeigen eine Reduktion von 33 % der Ausgangs-sulfoxidgruppen.
3.) Photochemische Reduktion:
Polyphenylensulfoxid wurde mit Photonen der Energie 20 eV (Strahlung einer kommerziellen UPS-Lampe, Typ UVS 10/35 der Firma Specs GmbH, Berlin) bzw. 1200 - 14000 eV (nicht monochromatisierte Mg kα-Strahlung einer kommerziellen ESCA-Anlage, PhI 5500 der Firma Physical Electronics GmbH, Ismaning) bestrahlt. Die Probe war im Ultrahoch-Vakuum und bei Raumtemperatur. Nach einer Bestrahlungszeit von 60 Minuten wurde die Probe mit monochromatisierter Al kα-Strahlung in derselben ESCA-Anlage analysiert. Das Ergebnis der Analyse ist in Tabelle 1 dargestellt.
In Tabelle 1 sind die Daten für Photonenquellen mit 20 / 40 eV und 1253 - 14000 eV aufgelistet.

**Tabelle 1**

| Quelle | Bestrahlungszeit | Reduktionsgrad | Oxidationsgrad |
|---|---|---|---|
| 20 eV / 40 eV | 60 Min. | 80 % | 20 % |
| 1253 - 14000 | 60 Min. | 87 % | 13 % |

4.) Thermische Reduktion:
Die folgenden Beispiele wurden für Polyphenylensulfoxid gemäß 1.) unter unterschiedlichen Bedingungen durchgeführt:

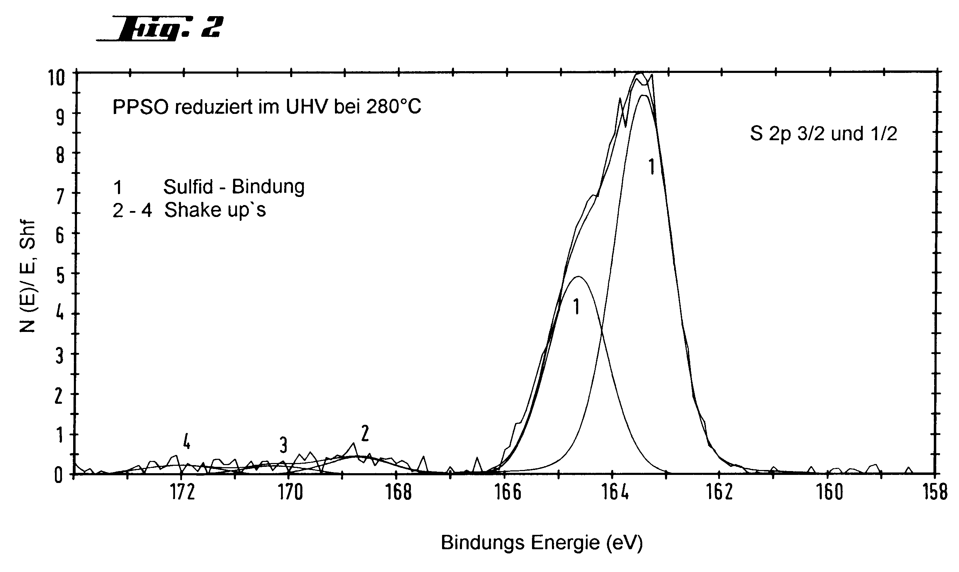

Abb. 2 zeigt das ESCA S2p-Spektrum, das mit einer kommerziellen ESCA-Apparatur mit monochromatisierter Al hα-Strahlung aufgenommen wurde, einer Reduktion bei 10⁻⁹ mbar im Ultrahochvakuum und einer Temperatur von 280°C. Zeit: 10 h. Die Umwandlung zu PPS ist quantitativ. Die Umwandlung zu PPS im Volumen konnte durch eine Schmelzpunktsbestimmung zusätzlich überprüft werden.

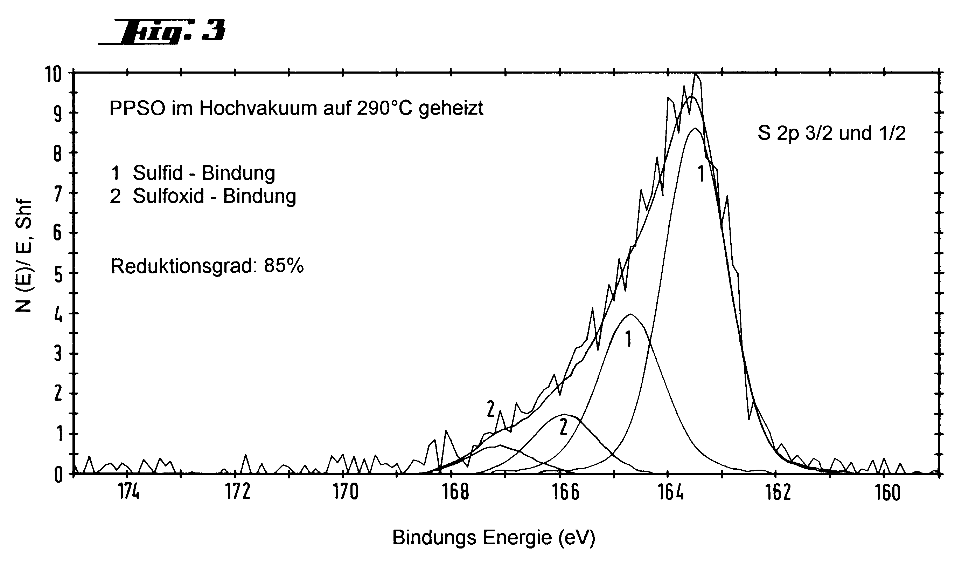

Abb. 3 zeigt ein ESCA S2p-Spektrum einer Probe, die in einer Glasapparatur in einem Rohrofen 5 Stunden bei 290°C geheizt wurde. Der Druck in der Apparatur betrug ca. 10⁻⁵ mbar. Die Apparatur wurde mit einer Turbomolekularpumpe und einer Drehschieberpumpe evakuiert. Auch hier ist im ESCA-Spektrum eine fast vollständige Umwandlung zu PPS erkennbar. Ein zusätzlich aufgenommenes IR-Spektrum zeigt, daß keine Sulfoxid-Gruppen mehr in der Probe enthalten sind.

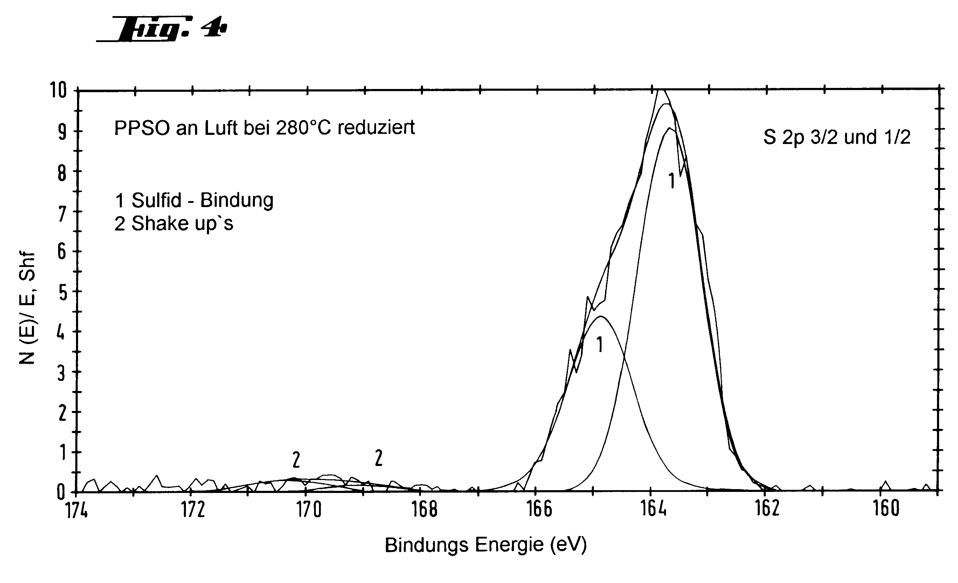

Abb. 4 zeigt ein ESCA S2p-Spektrum einer Probe, die an Luft bei 290°C 4 Stunden geheizt wurde. Die Behandlung fand in einem kommerziellen geschlossenen Ofen statt, ohne zusätzlichen Gasstrom. Das ESCA-Spektrum des S2p-Signals zeigt eine quantitative Reduktion zu PPS. Dieses Ergebnis wurde durch eine IR-Analyse bestätigt.

## Patentansprüche

1. Verfahren zur Herstellung von Polymersulfiden, dadurch gekennzeichnet, daß Verbindungen mit Sulfoxidverknüpfungsgruppen der Formel (I),
-[(Ar¹)ₙ-X)]ₘ-[(Ar²)ᵢ-Y)]ⱼ-[(Ar³)ₖ-Z)]ₗ-[(Ar⁴)ₒ-W)]ₚ- (I)
in der die Symbole und Indices folgende Bedeutung haben:
Ar¹, Ar², Ar³, Ar⁴ sind gleich oder verschieden Arylensysteme mit 6 bis 18 C-Atomen,
W, X, Y, Z sind gleich oder verschieden -SO₂-, -S-, -SO-, -CO-, -O-,-CO₂-, Alkylen- oder Alkylidgruppen mit 1 bis 6 C-Atomen, vorzugsweise 1 bis 4 C-Atomen, wobei mindestens eine Verknüpfungsgruppe aus W, X, Y oder Z, eine -SO-Gruppe sein muß,
n, m, i, j, k, l, o und p sind gleich oder verschieden 0 oder eine ganze Zahl 1,2,3 oder 4, wobei ihre Summe mindestens 2 ergeben muß,
a) thermisch oder
b) in Gegenwart von aktivem Wasserstoff oder
c) photochemisch
behandelt und zu den entsprechenden Sulfiden reduziert werden.

2. Verfahren nach Anspruch 1, dadurch gekennzeichnet, daß Verbindungen mit wiederkehrenden Einheiten der Formel (II) eingesetzt werden, 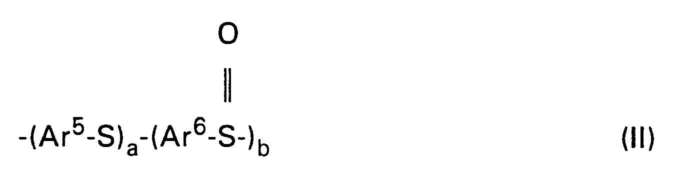 in denen Ar⁵ und Ar⁶ Naphtylen, Bi- und Tri-phenylen und Phenylen bedeutet und
in denen das Verhältnis von Sauerstoff zu Schwefel < = 1 und > 0 beträgt, wobei die Summe aus a und b stets 1 ist.

3. Verfahren nach Anspruch 2, dadurch gekennzeichnet, daß als wiederkehrende Einheiten die Formel III 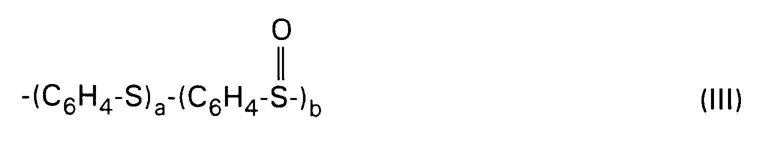 eingesetzt wird.

4. Verfahren nach einem oder mehreren der Ansprüche 1 bis 3, dadurch gekennzeichnet, daß die Reaktion mit aktivem Wasserstoff in Brönsted-Säuren durch Zugabe unedler Metalle mit einem Elektronenpotential, der unterhalb von Wasserstoff liegt, durchgeführt wird.

5. Verfahren nach einem oder mehreren der Ansprüche 1 bis 3, dadurch gekennzeichnet, daß die Reaktion mit aktivem Wasserstoff im Autoklaven unter homogenen Bedingungen durchgeführt wird.

6. Verfahren nach einem oder mehreren der Ansprüche 1 bis 3, dadurch gekennzeichnet, daß die Reaktion mit aktivem Wasserstoff im Autoklaven durch Suspensionshydrierungen in gesättigten aliphatischen Alkoholen mit C1-C5 gesättigten aliphatischen Alkoholen und/oder gesättigten aliphatischen Carbonsäuren durchgeführt wird.

7. Verfahren nach einem oder mehreren der Ansprüche 1 bis 3, dadurch gekennzeichnet, daß die photochemische Reaktion mit Strahlungsquellen im Energiebereich zwischen 0,5 und 1000.000.000 eV durchgeführt wird.

8. Verfahren nach einem oder mehreren der Ansprüche 1 bis 3, dadurch gekennzeichnet, daß die thermische Reaktion im Vakuumofen im Druckbereich von 1 bar bis 10⁻⁹mbar zwischen 100 und 600°C, durchgeführt wird.
